Europäisches Patentamt

European Patent Office

Office européen des brevets

(19)

(11) Publication number: 0 358 158
A2

# EUROPEAN PATENT APPLICATION

(21) Application number: 89116357.8

(51) Int. Cl.5: B29C 67/24

(22) Date of filing: 05.09.89

(30) Priority: 09.09.88 JP 226039/88

(43) Date of publication of application:
14.03.90 Bulletin 90/11

(84) Designated Contracting States:
BE DE FR GB IT NL SE

(71) Applicant: NIPPON ZEON CO., LTD.
6-1, Marunouchi 2-chome
Chiyoda-ku Tokyo 100(JP)

(72) Inventor: Kaneki, Tokio
1136-4, Kawaguchi-cho
Hachioji-shi Tokyo(JP)
Inventor: Niimura, Masaaki
3-10, 2-chome, Junoo-cho
Oomiya-shi Saitama(JP)

(74) Representative: von Kreisler, Alek,
Dipl.-Chem. et al
Patentanwälte Von Kreisler-Selting-Werner
Deichmannhaus am Hauptbahnhof
D-5000 Köln 1(DE)

(54) Hollow polycycloolefin molded product.

(57) A hollow product having thickest portion of less than 25 mm composed of a ring-opened polymer of at least one norbornene-type monomer and containing at least one hollow portion, the product is lightweight and is devoid of cracks due to the product being too thick.

EP 0 358 158 A2

# HOLLOW POLYCYCLOOLEFIN MOLDED PRODUCT

## Background of Invention

Recently, the development of technology relating to reaction injection molding (RIM) using a multi-ring norbornene monomer, such as dicyclopentadiene or methyl tetracyclododecene, has been in progress The molded product which can be obtained by this method is usually thin, with a thickness of less than 10 mm. No thicker products than about 10 mm have been obtained thus far. If an attempt is made to make a thick product exceeding thickness of about 10 mm, the molded product will often have cracks or holes inside. Also, since the open ring polymer of the norbornene type monomer contracts during its polymerization, the final product often does not have the desired shape due to sink marks.

The purpose of this invention is to solve all of the above problems of the conventional technique and to provide a reaction injection molding product without cracks or holes inside which is lightweight and of sufficient thickness.

## Summary of Invention

The reaction injection molding product of the current invention is made of an open ring polymer that can be obtained by ring-opening polymerization of a reaction solution containing a norbornene monomer and it is characterized by the fact that it contains within it a hollow part which reduces the thickest part of the polymer layer to less than 25 mm, preferably less than 10 mm.

## Brief Description of Drawings

Fig. 1 illustrates one version of the reaction injection molding product of this example with hollow transverse ribs and a hollow central opening;

Fig. 2 illustrates the spatial arrangement of longitudinal transverse corrugated elements and wire screens which are disposed in a mold to make a lightweight product free of cracks or voids;

Fig. 3 illustrates positioning of corrugated reinforcing material and a number of core elements disposed in a polymer matrix which results in a lightweight product having exceptional bending resistance in the direction transverse to the convolutions in the corrugated element.

## Detailed Description of Invention

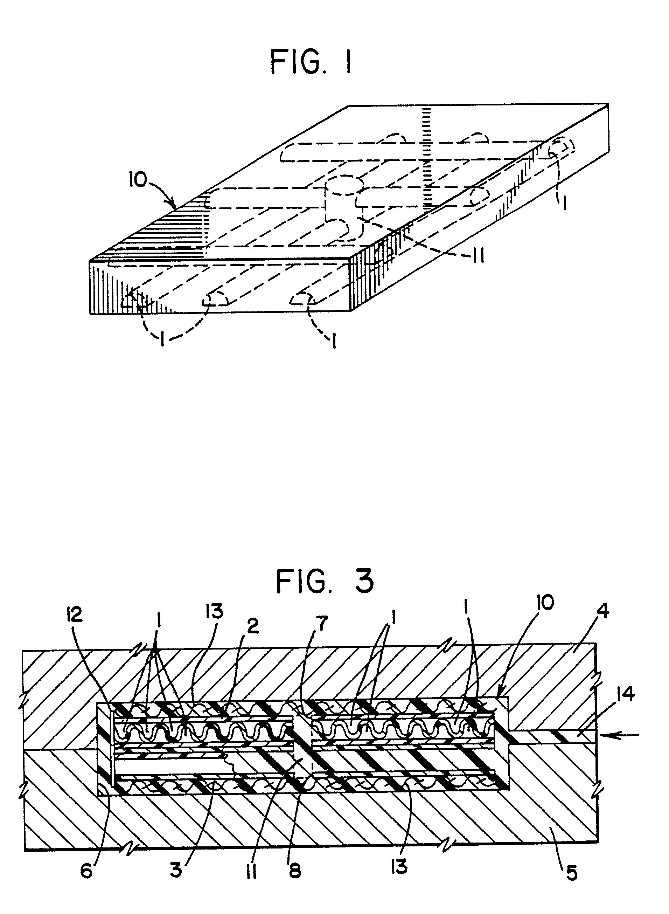

As shown in Figures 1 to 3, the reaction injection molding product 10 of this invention is a reaction injection molding product made of an open ring polymer that can be obtained by ring-opening polymerization of reaction solution containing norbornene type monomer. The product contains core materials 2 and 3 having hollow portions 1 which extend within the plane of the product.

As used herein, the term "hollow parts" does not necessarily mean that the portion is inside the product. This term also includes portions which extend from the edge into the product in order to reduce weight of the product and thickness thereof so that the product is lighter and is free of cracks.

In the embodiments of this invention shown in Figure 1 through Figure 3, in order to obtain a panel-shaped reaction injection molding product 10, the following method is used: the panel-shaped first core material 2, being superimposed upon the panel-shaped second core material 3, is placed within molds 4, 5 which have a panel-shaped cavity 6, as shown in Figure 3. Within the cavity 6 of these molds 4 and 5, reaction injection molding takes place.

The first core material 2 and the second core material 3 can be made of any material as long as they are molded into the shape with the hollow parts 1 inside; however, it is desirable to use a plastic material which does not interfere with the polymerization of the norbornene type monomer and has good adhesion with the open ring polymer that is generated. Specifically, thermoplastics are suited for the material which constitutes the core materials 2, 3, such as: polyethylene, polypropylene, polybutene, poly-4-methylpentene-1, ethylene-propylene copolymer, and polystyrene. When a reaction injection molding product is made from an open ring polymer of the norbornene type monomer devoid of any polar group, it is desirable that the core material be thermoplastic of a hydrocarbon type with good adhesion to it.

Also, the hollow parts 1 to be formed in such core materials 2, 3, should be spaces having a rib structure. The conventional rib structure can be used for this; however, in the example shown, since commercially available plastic corrugated panels are used as core materials 2, 3, the rib structure is formed by the panels with wavy cross-sectional shape formed as one piece between the above two panels, and between them, the hollow parts 1 are formed.

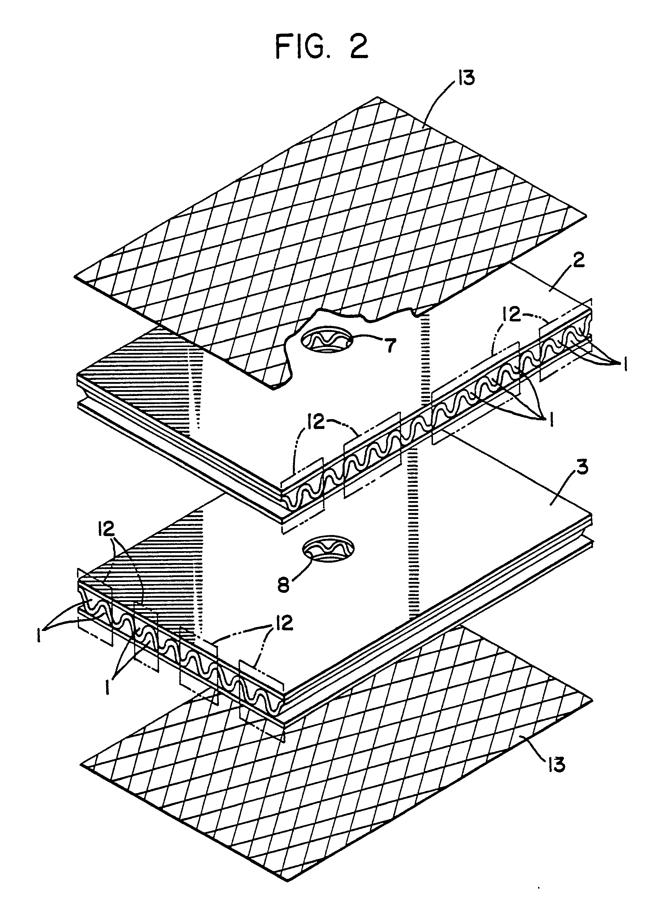

Especially in the embodiment shown in the figures, the first and second core materials 2, 3 are superimposed in such a way that the direction of the rib structure being formed in the first core material 2 and the direction of the rib structure being formed in the second core material are transverse, preferable at a right angle to each other, as can be seen from Figure 2. Within the molds 4, 5 shown in Figure 3, reaction injection molding takes place. The reason for making the directions of the first and second core materials 2,3 different is to provide the molded product 10 with strong resistance to bending in all directions. Since the resistance to bending of the rib structures being formed on the first and second core materials is strong only in one direction, changing the directions of the rib structures of the core materials 2, 3 can make the molded product much stronger.

Also in this embodiment, for the purpose of producing a strong bond between the first core material 2 and the second core material 3 inside the reaction injection molding product 10, central openings or through-holes 7, 8 are provided at the same positions which extend through the upper surface and the bottom surface. As such, when the core materials 2, 3 with through-holes 7, 8 are placed within the molds 4, 5, the reaction fluid enters into the cavity 6 and proceeds into the through-holes 7, 8. When the central part solidifies, column 11, shown in Figure 1, is formed. The column strongly bonds core materials 2, 3 to each other and at the same time, the rib structure by the polymer is formed in both vertical and horizontal directions, which enhances the product strength.

Furthermore, in this embodiment, as shown in Figure 2, tapes 12 are attached at certain intervals to the open end side edge of the rib structure formed on the first and second core materials 2, 3. This is to prevent the reaction fluid from entering into certain portions of the hollow parts. If the reaction fluid is allowed to enter into all of the hollow parts, the molded product 10 cannot be lightweight and it will not be possible to generate a heat expansion at the hollow parts. Means to close hollow parts 1 do not have to be tape 12 - any kind of filler can be used to close the open end of the hollow parts.

Moreover, in this embodiment, as shown in Figure 2 and Figure 3, nets or screens 13, as spacers, are placed on the upper surface of the first core material 2 and below the lower surface of the second core material. The assembly is placed within the cavity 6 and the reaction fluid is poured into cavity 6. The reason for placing nets 13 is to form space between the inner surface of cavity 6 and the surfaces of the core materials 2, 3 so that the reaction fluid can enter into the hollow spaces smoothly. The nets can be made of, for instance, glass fiber,carbon fiber or some other fibers. It is also possible to enhance the strength of the molded product 10 through the use of such nets 13. In addition, the spacers need not be nets; they can be just spacers of a cylindrical or rectangular columnar form. The spacers can be protrusions which are formed as one piece with the surface of the core materials 2, 3, or they can be separate spacers.

In the embodiment, as mentioned earlier, the assembly comprising nets 13 and core materials 2, 3 is placed within the cavity 6 of molds 4, 5 for reaction injection molding, as shown in Figure 3. By depositing the polymer in the hollow spaces of the assembly, a panel-shaped reaction injection molding product 10 shown in Figure 1 is made.

A norbornene type monomer is contained in the reaction fluid to be used in the reaction injection molding. The norbornene type monomer to be used in this invention should be one with 2 rings or more, preferably 3 rings or more, especially 3 to 5 rings. By using a monomer with 3 or more rings, it is possible to obtain a molded product 10 made of a polymer with high thermal deformation temperature.

Also, in this invention it is possible to use a thermosetting polymer as the polymer which constitutes the molded product 10. In such a case, at least 10 weight percent, preferably more than 30 weight percent, such as 30 to 100 weight percent of the entire monomer within the reaction fluid, should be a crosslinking type monomer.

Examples of the norbornene type monomers that can be used in this invention include bicyclic monomers such as 2-norbornene, 5-methyl-2-norbornene, 5-ethylidene-2-norbornene, 5-phenylnorbornene; tricyclic monomers such as dicyclopentadiene and dihydrodicyclopentadiene; tetracyclic monomers such as tetracyclododecene; and pentacyclic monomers such as tricyclopentadiene. The norbornene type monomers can have substituents such as methyl, ethyl, propyl, and butyl; alkylidene substitutes such as ethylidene; aryl substitutes such as phenyl; and also, substituents with polar radicals such as ester, nitrile, ether, and halogen. Due to ease of handling, reactivity, and heat resistance, the tricyclic, tetracyclic and pentacyclic monomers are used most effectively.

The crosslinking monomers are multi-ring norbornene type monomers which have two or more double bonds. Examples of such crosslinking monomers are norbornadiene, dicyclopentadiene, tricyclopentadiene and tetracyclopentadiene. Therefore, the norbornene type monomer and the crosslinking monomer can be identical, in which case, no separate crosslinking monomer is needed.

The norbornene type monomers can be used by themselves or as mixtures thereof.

The norbornene type monomers can also be obtained by heat-treating dicyclopentadiene. The conditions for this heat treatment are such that dicyclopentadiene is heated in an inert gas atmosphere at 120 to 250°C for 0.5 to 20 hours. By this heat treatment, a monomer mixture of pentacyclopentadecadiene and unreacted dicyclopentadiene can be obtained.

In addition, it is possible to use cyclobutene, cyclopentene, cyclopentadiene, cyclooctene, and cyclododecene, along with the aforementioned norbornene type monomers without defeating the purpose of this invention.

The catalyst to be used can be any metathesis catalyst known as the ring-opening polymerization catalyst of the norbornene type monomers as disclosed in the following patents: Japanese KOKAI 58-127728, 58-129013, 59-51911, 60-79035, 60-1865611, and 61-126115.

Examples of a metathesis catalyst include halide compounds of tungsten, molybdenum, and tantalum; and oxides and organic ammonium salts thereof. Examples of the activating agent or cocatalysts include alkyl aluminum halides, alkoxyalkyl aluminum halides, and organic tin compounds.

The metathesis catalyst is used in amounts of 0.01 - 50 millimoles, or preferably 0.1 - 10 millimoles, per 1 mol of the norbornene type monomer. The activating agent is used in mol ratio of 2 - 10 relative to the catalyst component.

The metathesis catalyst and the activating agent should be dissolved into the monomer when they are used; however, as long as they do not impair the quality of the molded product, they can be suspended or dissolved in a small amount of dissolving agent.

To increase monomer conversion to the polymer to in excess of 97%, a halometal compound can be used in amount of 0.05 to 10 millimoles, preferably 0.1 to 2 millimoles per mol of monomer(s). The halometal activator has the following formula:

$$R_m Y X_m$$

where m is 0 to 4; n is 1 to 5; R is individually selected from hydrogen, alkyl, alkenyl, alkoxy, aryl, alkaryl, and saturated and unsaturated cyclic groups and Y is a metal selected from tin, lead, magnesium, antimony, boron, germanium, and silicon. In a preferred embodiment, the initiator is selected from organic chlorosilanes of the following formula:

$$R_m Si X_n$$

where m is 0 to 3; n is 1 to 4; and R is individually selected from hydrogen and alkoxy groups of 1 to 6 carbons. Especially preferred activator is silicon tetrachloride.

It is possible to include an antioxidant in the reaction fluid that contains the norbornene type monomer. As the antioxidant, there are various types for plastics and rubbers, such as the phenol type, the phosphorus type, the amine type, etc. These antioxidants can be used separately or as a mixture.

By adding to the reaction fluid various additives, such as fillers, paints, coloring agents, elastomers, dicyclopentadiene type heat polymerization resins, the characteristics of the molded product 10 can be changed in various ways. These additives are mixed in one reaction fluid or in both before using.

As fillers, there are inorganic fillers such as crushed glass fiber, carbon black, talc, calcium carbonate and mica.

As elastomers, there are natural rubber, polybutadiene, polyisoprene, styrene-butadiene copolymer (SBR), styrene-butadiene-styrene block copolymer (SBS), styrene-isoprene-styrene block copolymer (SIS), ethylene-propylene-diene polymer (EPDM), ethylene-vinyl acetate copolymer (EVA), and hydrogenated products of the above. The elastomers serve as impact modifiers in the product and are used at a level of 1 to 10 weight percent, based on the monomer weight.

Preparation of the reaction fluid is conducted as follows: the norbornene type monomer is divided into two portions and placed in separate containers. In one container, the metathesis catalyst is added, and to the other the activating agent is added, thereby preparing two kinds of stable reaction fluids. Then, these two reaction fluids are mixed and fed into cavity 6 through inlet 14. It is also possible to divide the original fluid into more than two portions, if necessary. Feeding of the reaction fluid is usually conducted immediately after the mixing of the two fluids; however, when the kind of fluid with long pot life is used, it can be poured in at any time while the appropriate viscosity for pouring is maintained. In this sense, the reaction injection molding in this invention includes pour molding.

When the reaction fluid is fed into cavity 6, the norbornene type monomer in the reaction fluid goes through a mass polymerization reaction in cavity 6 and begins to set. As a result, the reaction injection molding product 10 made of a thermoplastic or thermoset open ring polymer of the norbornene monomer can be obtained. The mass polymerization is sufficient as long as it is substantial. It is acceptable even if a small amount of inactive dissolving agent remains in it.

In the reaction injection molding product 10 in this example due to core materials 2, 3 with the hollow parts 1, when the open ring polymer of the norbornene monomer tries to contract during the polymerization process, the hollow parts 1 of core materials 2, 3 expand by heat, thereby making the contact between the inner surface of cavity 6 and the surface of the product very tight. As a result, it is possible to obtain a reaction injection molding product 10 with a desired shape and smooth external surface without cracks or holes. Such a reaction injection molding product with the hollow parts inside can be very lightweight compared to other reaction injection molding products with the same volume. Furthermore, in this example, since hollow parts 1 are formed using the space of the rib structures formed on core materials 2, 3, the mechanical strength of the reaction injection molding product 10 can be stronger than other reaction injection molding products with the same weight.

In addition, this invention is not limited to the above embodiment and various variations can be made. For instance, the shape of the reaction injection molding product is not limited to a panel shape; it can have other shapes. Or, the number or position of the core materials to be provided within the product does not have to be the same as in the embodiment; they can be changed according to the external shape of the molded product. For instance, there can be only one core material or there can be two, three, four, or more.

This invention will now be explained by application examples; however, it is not limited to these examples. In the examples, "parts" and "percent" mean weight parts and weight percent, unless otherwise indicated.

APPLICATION EXAMPLE 1

Dicyclopentadiene (DCP) was placed in two containers. In one container, 0.5 part of diethylaluminum chloride, 0.2 part of n-propanol, 0.3 part of silicon tetrachloride, 5 parts of SIS rubber, and 1 part of antioxidant (Ethanox-702, made by Ethyl Corp., a methylenebisphenol type antioxidant) were added to 100 parts of DCP. This was Fluid A.

In the other container, 0.4 part of tri-(tridecylammonium) molybdate, 5 parts of SIS rubber, and 1 part of antioxidant (Ethanox-702) were added to 100 parts of DCP. This was Fluid B.

Fluid A and Fluid B, both at 35°C, kept in separate containers, were placed in a mixer in such a way that the ratio between the two fluids was 1:1. After mixing them, the mixture was poured into the mold. The mold was made of aluminum and had a flat cavity of 1100 mm x 1100 mm x 13 mm.

On a long fiber glass mat with a thickness of 2.5 millimeters (mm) corrugated panels made of polypropylene with a thickness of 4 mm and having a thin rib structure with an interval of 4 mm width were placed in two tiers as shown in Figure 2. The open end edges of each of the corrugated panels were covered with tape so that some parts were left open permitting the polymer to form the ribs at intervals of 4 cm. In the center of the two corrugated panels, through-holes with a diameter of 1 cm were provided. On the upper layer of the corrugated panels, long fiber glass mats were also placed.

The temperature of the mold was 70°C. After setting for 90 seconds following the pouring, the mold was opened and the molded thermoset product was removed.

The product obtained had a rib structure both in longitudinal and transverse directions, in two separate parallel planes, as shown in Figure 1, with 4 cm intervals and 4 mm width. Its maximum bending weight was 230 Kg/cm², its maximum bending stress was 200 Kg/cm², and its deflection amount was 5.75 mm. The adhesion between the corrugated panel and the polymer layer was very good.

The setting condition on the surface was also good and the surface had no sink marks. The product weight was approximately 10 kg which was less than two thirds of the weight of the product with the same shape molded using Fluid A and Fluid B without the hollow rib portions.

This molded product had sufficient mechanical strength to be used as side panels of foldable containers. When this product was used as a form for concrete, it showed excellent water resistance, corrosion resistance, excellent concrete finish, and improved durability, when compared with conventional plywood forms.

COMPARATIVE EXAMPLE 1

Without using the corrugated panels made of polypropylene and the long fiber glass mats, the same operations were conducted as in Application Example 1. The surface of the product obtained was sticky and contained sink marks and many holes were present inside the product. Therefore, this product had a poor commercial value.

APPLICATION EXAMPLE 2

The same method was used as in Application Example 1, except for the following: (1) three corrugated panels being made of polypropylene with a thickness of 10 mm were used, each arranged transversely to the adjacent one; (2) ribs with a width of 4 mm were made at intervals of 10 cm; (3) polyethylene columns of 5 mm x 5 mm diameter were set at four corners to space the corrugated panels; (4) the size of the mold was 500 mm x 500 mm x 40 mm.

The surface of the molded product had no sink marks and was not sticky. Its weight was approximately 4 kg. In addition, with the product of this thickness, it is easy to form patterns of the surface. Therefore, this product is suited for a door with carved patterns, etc.

## Claims

1. Product composed of ring-opened polymer of at least one norbornene-type monomer that is free of cracks in its structure and which contains hollow ribs inside.

2. Product of claim 2 which includes at least two series of transverse hollow ribs in said product, each series being disposed in a single plane.

3. Product of claim 2 wherein said norbornene-type monomer is a homopolymer of dicyclopentadiene or a copolymer of dicyclopentadiene containing a major proportion of dicyclopentadiene.

4. Product of claim 2 wherein said norbornene-type monomer is a copolymer of dicyclopentadiene and a comonomer selected from heat reaction product of dicyclopentadiene, ethylidenenorbornene, vinyl norbornene, and mixtures thereof.

5. Product of claim 4 which is less than two thirds the weight of product made from said at least one norbornene-type monomer which is devoid of said hollow ribs.

6. Product of claim 2 wherein said series of ribs are at right angle to adjacent series of ribs.

7. Product of claim 1 wherein said polymer is reaction injection product which is polymerized with an organoammonium molybdate or tungstate catalyst an alkoxyalkylaluminum halide cocatalyst, and a chlorosilane activator.

8. Product of claim 1 wherein said polymer is thermoset.

9. Product of claim 1 wherein the thickest portion of the polymer layer is less than 25 mm.

10. Product of claim 1 wherein the thickest portion is less than 10 millimeters.

11. Product of claim 8 wherein said catalyst is tri(tridecylammonium) molybdate which is used in amount of 0.1 to 10 millimoles per 1 mol of the norbornene monomer(s) and said cocatalyst is reaction product of diethylaluminum chloride and n-propanol which is used in the molar ratio of 2 to 10 relative to said catalyst, said product being prepared with silicon tetrachloride activator in amount of 0.02 to 10 millimoles per mol of monomer(s) to improve monomer conversion to polymer and impact modifier in amount of 1 to 10% by weight based on the weight of said monomer(s) for imparting impact resistance to said product.

# FIG. 1

# FIG. 3

# FIG. 2